(19) **Europäisches Patentamt**
**European Patent Office**
**Office européen des brevets**

(11) **EP 2 743 737 A2**

(12) **EUROPEAN PATENT APPLICATION**

(43) Date of publication:
18.06.2014 Bulletin 2014/25

(51) Int Cl.:
**G01V 1/38** (2006.01)

(21) Application number: 13197540.1

(22) Date of filing: 16.12.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 17.12.2012 US 201261738070 P

(71) Applicant: CGG Services SA
91300 Massy (FR)

(72) Inventors:
• **Svay, Julie**
91300 MASSY (FR)
• **Bousquie, Nicolas**
91300 MASSY (FR)
• **Mensch, Thomas**
91300 MASSY (FR)
• **Siliqi, Risto**
91300 MASSY (FR)

(74) Representative: **Regimbeau**
**20, rue de Chazelles**
**75847 Paris Cedex 17 (FR)**

(54) **Methods and systems for quality control of seismic illumination maps**

(57) Methods and systems for quality control of seismic data illumination map generation are described. The quality control is based on determined fold differences calculated using the actual position of the sources and receivers in the determination of the seismic illumination.

In another aspect, sub-surface complexity is considered in preparing a map of seismic illumination. The seismic data illumination map can be evaluated in real-time onboard a seismic vessel and included as part of an infill reshoot decision making/ quality control process.

## Figure 5(a)

**Description**

**RELATED APPLICATION**

The present application is related to, and claims priority from, U.S. Provisional Patent Application No. 61/738,070, filed December 17, 2012, entitled "METHODS AND SYSTEMS FOR SEISMIC ILLUMINATION MAP GENERATION", to Julie SVAY, Nicolas BOUSQUIE, Thomas MENSCH and Risto SILIQI, the disclosure of which is incorporated herein by reference.

**TECHNICAL FIELD**

Embodiments of the subject matter disclosed herein generally relate to methods and systems for seismic data processing and, more particularly, to mechanisms and techniques for performing quality control of seismic illumination maps.

**BACKGROUND**

Seismic data acquisition and processing techniques are used to generate a profile (image) of a geophysical structure (subsurface) of the strata underlying the land surface or seafloor. Among other things, seismic data acquisition involves the generation of acoustic waves and the collection of reflected/refracted versions of those acoustic waves to generate the image. This image does not necessarily provide an accurate location for oil and gas reservoirs, but it may suggest, to those trained in the field, the presence or absence of oil and/or gas reservoirs. Thus, providing an improved image of the subsurface in a shorter period of time is an ongoing process in the field of seismic surveying.

As part of the process of generating such images, e.g., based on seismic trace data the collection of which is described in more detail below, fold maps (also called illumination maps) are generated. Fold maps indicate the ability of a seismic survey to illuminate the subsurface. For a given target point, illumination is defined as the weighted occurrence of reflection impacts, that is, basically, the number of source-receiver couples for which asymptotic reflection takes place at that given target point. Thus, in essence, these fold or illumination maps intend to describe where seismic reflections occur as a function of depth and how redundant these seismic reflections are.

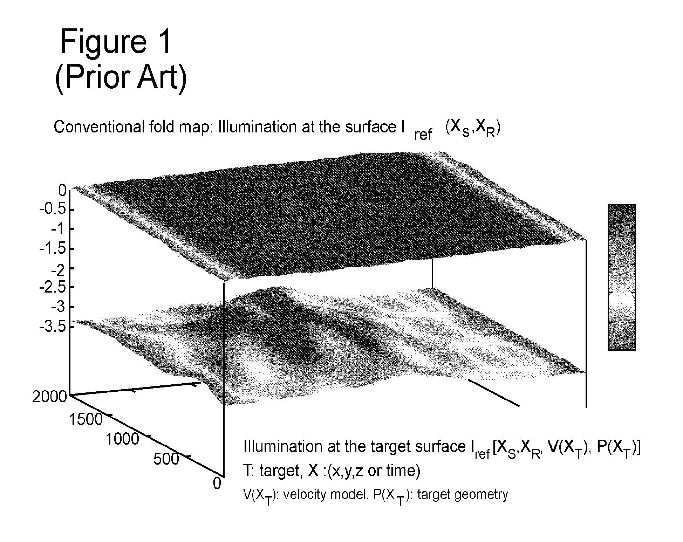

Figure 1 illustrates an example of a conventional fold map. In conventional fold map generation, the contribution of a given seismic trace to the illumination of the sub-surface is attributed to the midpoint. The computation of the midpoint location is straightforward because it corresponds to the geometrical midpoint between the source position and the receiver position. It is noted that a good acquisition survey provides sufficient and balanced illumination of the sub-surface and, to that end, conventional fold maps rely on midpoints and the related quality control (QC) is based solely upon surface geometrical criterion.

The midpoint location analysis is a correct assessment of the illumination for a sub-surface target only if certain assumptions can be validly made for the underlying strata. These assumptions include that the underlying strata being imaged is a simple geological media such as a strata having a constant velocity layer, a vertical velocity gradient, or a stack of horizontal layers, i.e., a layer cake model. For other geological configurations, such as laterally heterogeneous media or in the presence of dipping reflectors, the midpoint location analysis does not fit as a reflection point and produces less than desirable results, i.e., the classical fold maps become a crude approximation of the true illumination of a seismic target. As will be appreciated by those skilled in the art, "dipping reflectors" are reflectors of acoustic waves which are located at a different depth in a subsurface layer relative to other reflectors, thereby creating "dips" in the layer and potential anomalies in the reflectivity patterns of the received acoustic waves.

Accordingly, whenever knowledge about a sub-surface velocity model associated with the targeted strata becomes available, either from a *priori* geological knowledge or based on the processing of vintage surveys, then true illumination mapping can be achieved by taking into account wave-path distortion during propagation through the sub-surface. This results in restoring the hit-count of reflection paths in reflection points at given depth horizons to generate the actual illumination of the target points in the map. As will be appreciated by those skilled in the art, 4D seismic surveying refers to the technique of taking one seismic survey of a particular geographical area at a first time (i.e., the baseline survey) and another seismic survey of the same geographical area at a later time (i.e., the monitor survey). The baseline survey and the monitor survey can then be compared for various purposes, e.g., to observe changes in the hydrocarbon deposits in a geographical area which has an active well operating therein. Different seismic surveys performed at different times for the same geographical area are also sometimes referred to as different "vintages". In order for the comparison to be meaningful it is, therefore, important that the surveys be performed in a manner which is highly repeatable, i.e., such that the monitor survey is performed in much the same way (e.g., position of sources and receivers relative to the geography) as the baseline survey was performed.

The need for accurate illumination maps is pressing. For example, time-lapse surveys that are carried out to reveal four-dimensional (4D) changes in the sub-surface reservoir may induce biased perturbations based on mis-positioning between multiple surveys, i.e., source deviation or streamer feathering, i.e., the deviation of the towed streamer from a line astern of the towing vessel. Beyond geometrical criterion, repeatability of target illumination impacts decisions associated with areas requiring a re-shoot and can lead to either too little or too much re-shooting, which impacts the potential for mis-positioning in 4D surveys. Accordingly, it would be desirable to be able to generate accurate illumination maps during seismic acquisition surveys in order to improve the accuracy of seismic surveys.

Attempts have been made to correct some of these issues. For example, the interested reader is referred to P. Herrmann and N. Bousquié in their 2003 U.S. Patent 7,406,383 entitled "Method of Estimating the Illumination Fold in the Migrated Domain," M. Brink, N. Jones, J. Doherty, V. Vinje and R. Laurain in their 2004 article entitled "Infill Decisions Using Simulated Migration Amplitudes" and published in 74th meeting, Society of Exploration Geophysicists, Expanded Abstract, pages 57-60, G. Winbow and W. Schneider in their 2004 U.S. Patent 6,691,075 entitled "Method for Modeling Seismic Acquisition Footprints," W. Pramik, A. Mathur, A. Lubrano, S. Strandenes, L. Long, C. Strand, B. Danielsen and J. Lima in their 2005 U.S. Patent entitled "Illumination Monitoring Process for Making Infill Decisions," and D. Monk in his 2009 U.S. patent application 2009/0279386A1 entitled "Method for Determining Adequacy of Seismic Data Coverage of a Sub-surface Area Being Surveyed" all of which are incorporated herein by reference. However, none of these attempts have fully addressed the need for a quality control mechanism that addresses 3D and 4D seismic surveying, as well as providing a capability to provide in fill decision guidance during a seismic acquisition.

Accordingly, it would be desirable to provide systems and methods that avoid the afore-described problems and drawbacks by performing quality control of seismic fold (illumination) maps.

## SUMMARY

Quality control of illumination associated with seismic surveying or acquisition, among other things, is addressed by the embodiments described herein. One or more comparisons associated with illumination are made, e.g., between one seismic survey vintage and another seismic survey vintage.

According to an embodiment, a method for performing quality control of a seismic survey includes the steps of acquiring navigation data associated with positions of sources and receivers used to perform the seismic survey, determining an illumination associated with one or more horizons of a subsurface using the navigation data, comparing the determined illumination with an illumination from a baseline survey or preplot navigation data, and outputting at least one quality control indicator based on the comparing step.

According to another embodiment, a quality control system for marine seismic data acquisition includes one or more processors configured to execute computer instructions and a memory configured to store the computer instructions wherein the computer instructions further comprise: a collection component for collecting navigation data associated with a seismic survey. an engine component for processing said navigation data based on a target horizon to determine an illumination associated with the seismic survey, a quality assessment component for calculating a quality factor associated with the illumination based on an output from the engine component and based on another illumination associated with either a baseline seismic survey or preplot navigation data; and an output component for outputting the quality factor.

According to another embodiment, a method for performing quality control of a 4D seismic survey includes the steps of acquiring navigation data associated with positions of sources and receivers used to perform a monitor seismic survey, determining an illumination associated with one or more horizons of a subsurface using the navigation data from the monitor seismic survey, comparing the determined illumination with an illumination from a baseline seismic survey by determining a difference in fold between the illumination associated with the monitor seismic survey and the illumination from the baseline seismic survey, and outputting at least one quality control indicator based on the comparing step.

## BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 depicts a conventional fold or illumination map;
Figures 2-3 show aspects of an exemplary marine seismic survey system in which various illumination map generation embodiments can be implemented;
Figure 4 shows various aspects of reflection ray theory;
Figure 5(a) is a flowchart illustrating quality control based on illumination according to an embodiment;
Figure 5(b) is a flowchart depicting a method of illumination processing according to an embodiment;
Figures 6-11 show various aspects of software components or modules which can be used to implement the embodiments;

Figure 12 illustrates an exemplary data processing device or system which can be used to implement the embodiments.

## DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. Some of the following embodiments are discussed, for simplicity, with regard to the terminology and structure of generating maps of seismic illumination during marine acquisition. However, the embodiments to be discussed next are not limited to these configurations, but may be extended to other arrangements as discussed later.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to various embodiments described herein, seismic methods and systems which, for example, take into account the true (accurate) source and receiver locations, and the complexity of the subsurface to generate quality control indicators associated with illumination during acquisition. Such methods and systems can, for example, be used in the quality control of the data acquisition and help guide those performing seismic surveys to make infill decisions during the surveys.

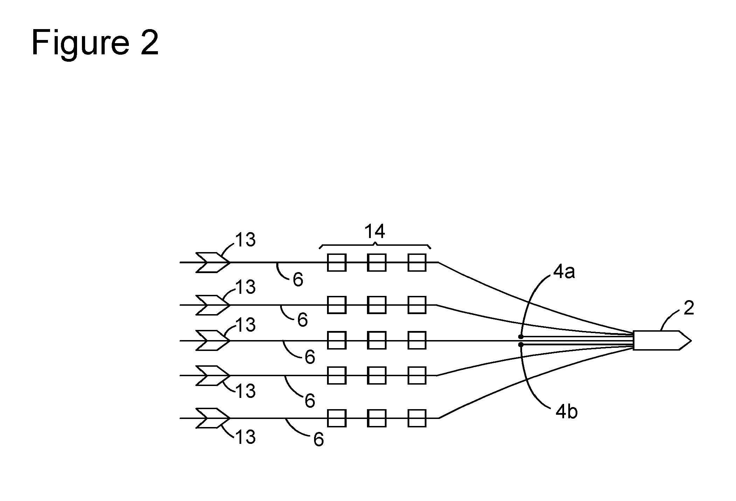

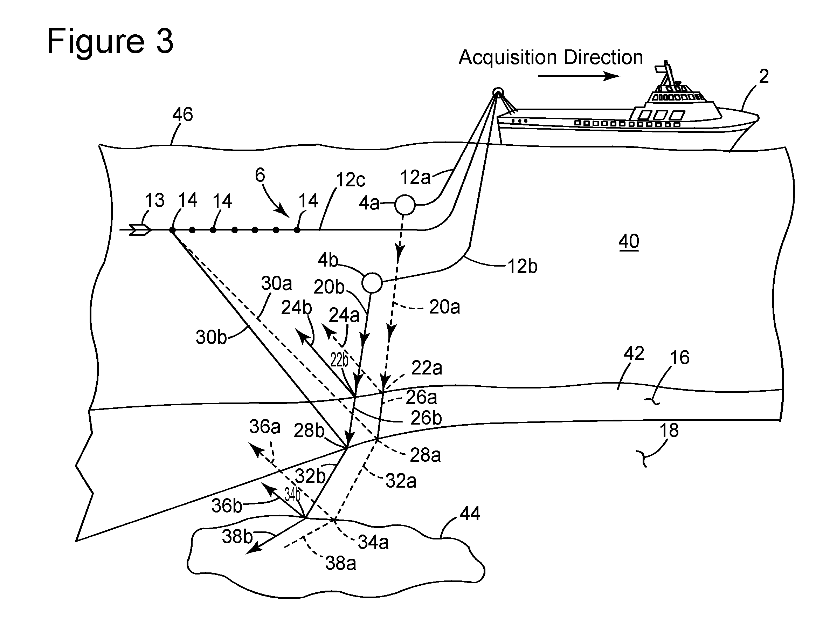

In order to provide some context for the subsequent exemplary embodiments related to the generation of seismic illumination maps, consider first a seismic data acquisition process and system as will now be described with respect to Figures 2-4. In Figure 2, a data acquisition system 10 includes a ship 2 towing plural streamers 6 that may extend over kilometers behind ship 2. Each of the streamers 6 can include one or more birds 13 that maintains streamer 6 in a known fixed position relative to other streamers 6, and the birds 13 are capable of moving streamer 6 as desired according to bi-directional communications birds 13 can receive from ship 2. One or more source arrays 4a,b may be also towed by ship 2 or another ship for generating seismic waves. Source arrays 4a,b can be placed either in front of or behind receivers 14, or both behind and in front of receivers 14. The seismic waves generated by source arrays 4a,b propagate downward, reflect off of, and penetrate the seafloor, wherein the refracted waves eventually are reflected by one or more reflecting structures (not shown in Figure 2) back to the surface (see Figure 3, discussed below). The reflected seismic waves propagate upwardly and are detected by receivers 14 provided on streamers 6. This process is generally referred to as "shooting" a particular seafloor area, and the seafloor area can be referred to as a "cell".

Figure 3 illustrates a side view of the data acquisition system 10 of Figure 2. Ship 2, located on ocean surface 46, tows one or more streamers 6, that is comprised of cable 12c, and a plurality of receivers 14. Shown in Figure 3 are two sources, which include sources 4a,b attached to respective cables 12a,b. Each source 4a,b is capable of transmitting a respective sound wave, or transmitted signal 20a,b. For the sake of simplifying the drawings, but while not detracting at all from an understanding of the principles involved, only a first transmitted signal 20a will be shown (even though some or all of sources 4 can be simultaneously (or not) transmitting similar transmitted signals 20). First transmitted signal 20a travels through ocean 40 and arrives at first refraction/reflection point 22a. First reflected signal 24a from first transmitted signal 20a travels upward from ocean floor 42, back to receivers 14. As those of skill in the art can appreciate, whenever a signal - optical or acoustical - travels from one medium with a first index of refraction $n_1$ and meets with a different medium, with a second index of refraction $n_2$, a portion of the transmitted signal is reflected at an angle equal to the incident angle (according to the well-known Snell's law), and a second portion of the transmitted signal can be refracted (again according to Snell's law).

Thus, as shown in Figure 3, first transmitted signal 20a generates first reflected signal 24a, and first refracted signal 26a. First refracted signal 26a travels through sediment layer 16 (which can be generically referred to as first subsurface layer 16) beneath ocean floor 42, and can now be considered to be a "new" transmitted signal, such that when it encounters a second medium at second refraction/reflection point 28a, a second set of refracted and reflected signals 32a and 30a, are subsequently generated. Further, as shown in Figure 3, there happens to be a significant hydrocarbon deposit 44 within a third medium, or solid earth/rock layer 18 (which can be generically referred to as second subsurface layer 18). Consequently, refracted and reflected signals are generated by the hydrocarbon deposit, and it is the purpose of data acquisition system 10 to generate data that can be used to discover such hydrocarbon deposits 44.

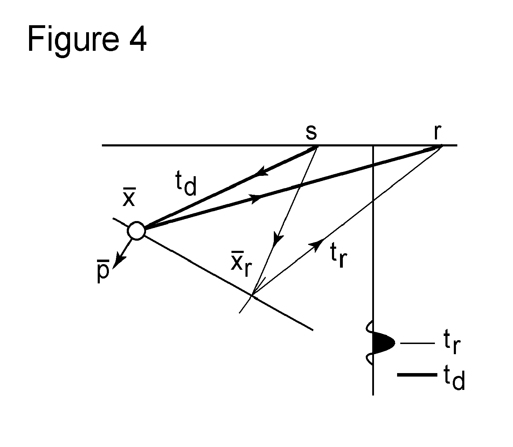

The data collected by receivers 14 can be processed to, among other things, generate the types of illumination maps described above. This involves, among other things, detection of reflection points, the binning of hit count and taking into account the frequency dependent spread of illumination. Considering first the automatic detection of a reflection point, a given source-receiver pair (s, r), e.g., as shown in Figure 4, and a depth horizon *H*, an automatic detection of a reflection point $x_r \in H$ can be determined using Fermat's principle and stationary phase analysis. For any point $x \in H$ in

the vicinity of $x_r$, a Taylor expansion of the reflection travel time $t(x_r)$ around x (here at second order) can be derived as:

$$t(\mathbf{x}_r) = t(\mathbf{x}) + (\nabla_\mathbf{x} t)^T (\mathbf{x}_r - \mathbf{x}) + \frac{1}{2} (\mathbf{x}_r - \mathbf{x})^T \nabla_\mathbf{x} \nabla_\mathbf{x} t (\mathbf{x}_r - \mathbf{x}), \qquad (1)$$

where $\nabla_x$ denotes the vector differential operator and $\nabla_x \nabla_x$ denotes the Laplacian operator. An exemplary pictorial relationship between these variables is illustrated in Figure 4.

Continuing with the example, the spatial derivatives of travel time along H are evaluated. First let $p(p_x, p_y, p_z)$ be the local normal to horizon H and $(e_1, e_2, e_3)$ the local tangential coordinate system (p and $e_3$ being collinear) at diffracting point x. Next, coordinates are changed from Cartesian to a local system through a 3x2 transfer matrix **M:**

$$\mathbf{M} = \begin{pmatrix} 1 & 0 \\ 0 & 1 \\ -p_x/p_z & -p_y/p_z \end{pmatrix}.$$

The reflection point $x_r$ belongs to H, so that the local coordinates of $x_r$ are expressed by a (2x1) vector $\mathbf{k}(k_1, k_2)$ with:

$$\mathbf{x_r} = \mathbf{M}\,\mathbf{k}.$$

Further, the gradient of travel time along H is then given by the (2x1) vector b as:

$$\mathbf{b} = \mathbf{M}^T (\nabla_\mathbf{x} \nabla_\mathbf{x} t_d)$$

and the Laplacian for second-order tome derivatives along H is the (2x2) matrix F, represented as:

$$\mathbf{F} = \mathbf{M}^T (\nabla_\mathbf{x} \nabla_\mathbf{x} t_d)\, \mathbf{M}.$$

Accordingly, equation (1) is rewritten as:

$$\phi(\mathbf{x}) = t(\mathbf{x_r}) - t(\mathbf{x}) = \frac{1}{2} \mathbf{k}\, \mathbf{F}\, \mathbf{k} + \mathbf{b}^T \mathbf{k}\,.$$

At the reflection point, we have the stationary condition $\phi(\mathbf{x}) = 0$, so that $x_r$ is determined from:

$$\mathbf{k} = -\mathbf{F}^{-1}\mathbf{b}$$

or

$$\mathbf{x_r}(\mathbf{p}) = \mathbf{x} - \mathbf{M}\, \mathbf{F}^{-1}\, \mathbf{b}$$

with travel time relation:

$$t(\mathbf{x_r}) = t(\mathbf{x}) - \frac{1}{2}\mathbf{b}^T\mathbf{F}^{-1}\mathbf{b}.$$

Basically, travel time and its associated derivatives are calculated for each point $x \in$ H, and the reflection point $x_r \in$ H associated to a given source-receiver pair ($s$, $r$) is detected as the point for which the travel time gradient is zero. The reflection points are then the loci where the gradient of double time is co-linear to the local dip.

Next, considering the asymptotic hit count, a sub-surface horizon is gridded into reflection bins, i.e., a set of discrete points $x \in$ H. According to asymptotic high-frequency approximation, wave propagation can be described by wave theory. In simple cases, for a given source-receiver pair (s, r) there is only one reflection point $x=x_r$ on horizon H and this point is where incident ray (from s to x) and diffracted ray (from x to r) obey Snell's Law. Continuing, for each bin, an asymptotic hit-count is defined as the occurrence of refection impacts for the entire survey, i.e., the number of traces for which the reflection point belongs to the bin. Therefore, counting is described as being performed in terms of reflection points.

Further, considering frequency-dependent spread of illumination, it should be noted that seismic sources carry band-limited frequency content. More realistically, asymptotic rays are better thought of as beams and the single reflection point thought of as a spread of reflection points, i.e., normal cross-section to H between incident and reflected beams. For each asymptotic reflection bin $\mathbf{x_r}$, a reflection-spread $A(x_r)$ c H $(\mathbf{x_r})$ is defined that is spatially delimited by the travel time condition:

$$\mathbf{x_s} \in A(\mathbf{x_r}) \text{ if } |t(\mathbf{x_r}) - t(\mathbf{x_s})| \leq \Delta_{max},$$

where $\Delta_{max}$ is a criterion limit. The reflection spread equation is designed as a function of signal content to ensure that seismic response from $\mathbf{x_s}$ is additively contributing to reflected response from $\mathbf{x_r}$. In particular, this means that $A$ must be included in the frequency dependent Fresnel zone.

Next, for each bin of reflection-spread $\mathbf{x_s} \in A(\mathbf{x_r})$, the spread-point weight is defined as:

$$I(\mathbf{x_s}) = S\left(t(\mathbf{x_r}) - t(\mathbf{x_s})\right),$$

where S is a weighting function. The weighting function is defined as a function of seismic wavelet, normalized at the $\mathbf{x_r}$ center of spread area. Further, under high-frequency assumption, S(t) is the Dirac impulse such that the spread area reduces to a reflection point with unit count. Continuing, for each bin($i$, $j$), a -reflection bin illumination is defined as the sum of all spread-point weights allocated to the bin. These, and other, aspects of the data processing associated with the generation of illumination maps can be found in U.S. Patent No. 7,406,383 to Hermann and Bousquié, the disclosure of which is incorporated herein by reference.

With this context in mind regarding the generation of fold or illumination maps per se, embodiments described below extend the techniques of determining an illumination fold for each acquisition geometry under consideration and selecting an acquisition geometry providing the optimum illumination fold as a function of the target horizon by monitoring the quality of the in progress seismic acquisition in 3D and 4D contexts. In this context, the term "target horizon" refers to a single horizon (flat or not), a set of horizons for different targets, and/or a chunk slice of the subsurface model. Thus, the "target horizon" can be referenced either in terms of vertical depth or in terms of vertical migrated time. For example, embodiments described herein enable monitoring the quality of an in-progress acquisition where the geometry of the source/receiver distribution differs, e.g., based on ocean current, from the preplot in a 3D analysis or from the base survey in a 4D analysis. As will be appreciated by those skilled in the art, "preplot" refers to a predetermined survey of a geographical area and includes "preplot navigation data" associated with geographical coordinates that define survey lines to be traversed by the survey vessel(s) during the performance of the seismic survey.

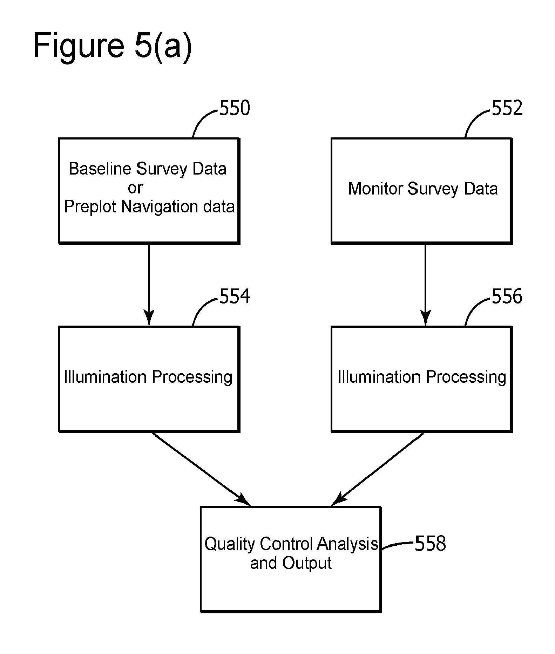

A general method for performing a quality control analysis of a seismic survey and outputting one or more quality control indicators as a result of the analysis is illustrated in Figure 5(a). Therein, steps 550 and 552 represent data acquisition or input of that data to the process. More specifically, the data represented by steps 550 and 552 refer to the acquisition of navigation data associated with positions of sources and receivers used to perform the seismic survey. Note that, if the embodiment is used to perform quality control of a 3D survey, then the acquired or input data in block 550 will be preplot navigation data, whereas if the embodiment is used to perform quality control of a 4D survey, then the acquired or input data in block 550 will be data from an earlier (baseline) survey.

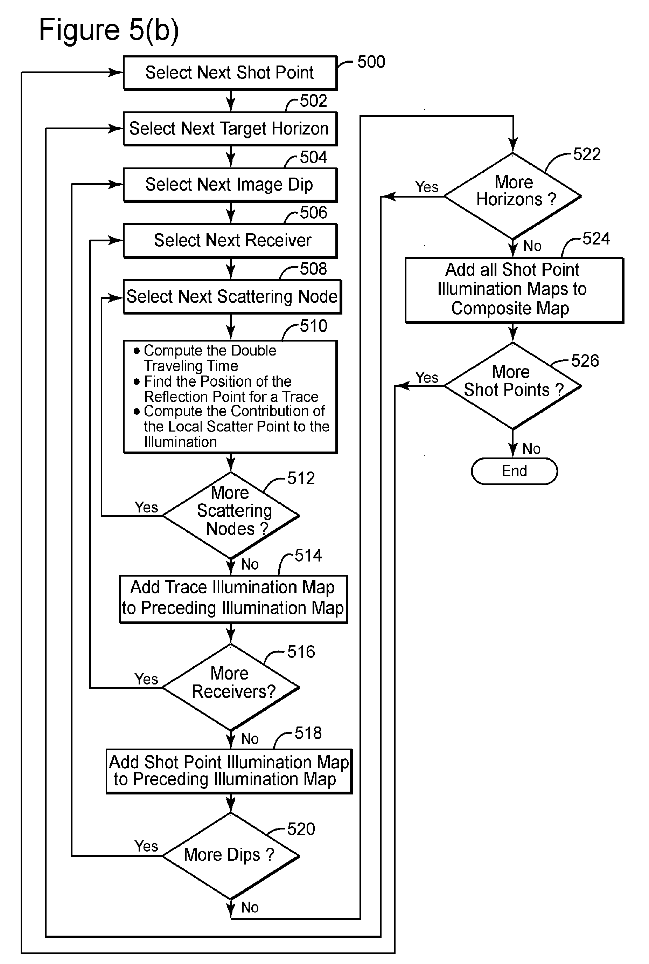

Regardless of whether the embodiment of Figure 5(a) is applied to 3D or 4D seismic surveys, the method continues with the processing of the input data to determine the illumination associated with each data set as shown generally by steps 554 and 556. More specifically, steps 554 and 556 refer to determining an illumination associated with one or more horizons of a subsurface using the navigation data supplied from steps 550 and 552, respectively. An exemplary method for performing the illumination processing of steps 554 and 556 is described in more detail below with respect to Figure 5(b).

The output of the illumination processing performed in steps 554 and 556 is then provided to step 558 wherein a quality control (QC) analysis is performed and one or more quality control indicators are output as a result of the QC analysis. More specifically, and purely as an example, this QC analysis can involve comparing the determined illumination associated with the monitor survey data with the determined illumination from the baseline survey data or preplot navigation data. For example, in the embodiments involving a 3D acquisition, the quality control analysis described herein is applied to the new navigation data in order to assess the quality of the illumination for one or more targets compared to the expected illumination, the latter of which can be theoretically determined from the preplot lines. Alternatively, for embodiments involving 4D seismic acquisition, a similar quality control analysis can be applied between base and monitor vintages to assess the repeatability of the illumination for one or more targets.

In either case, the comparisons between the illuminations which are performed in the quality control analysis may include one or more of the following computations :

-- the computation of difference maps of fold of illumination either at midpoint bin coordinates or in reflection point bin coordinates; and/or

-- the computation of maps of misfits between source position and receiver position, either at midpoint bin coordinates or at reflection point bin coordinates; and/or

-- the computation of maps of misfits between reflection point positions between monitor survey traces and baseline survey traces (for 4D embodiments), or between true acquisition traces versus preplot. traces (for 3D embodiments) either at midpoint bin coordinates or at reflection point bin coordinates.

It will be appreciated by those skilled in the art that the foregoing examples of the quality control analysis are purely illustrative, but that the embodiments are not limited to these examples and may include other comparisons associated with the determined illuminations. Regardless, the quality control output (sometimes referred to herein also as the quality factor or indicator) which is generated as a result of one or more of the computations described above can, for example, be a scalar value, e.g., 1-10, which indicates to an operator whether the survey (or part thereof, e.g., survey line) being performed has an acceptable quality. The resulting QC output can, for example, be used by seismic acquisition system operators to determine whether to re-shoot one or more acquisition lines associated with an ongoing monitor survey as part of an in-fill decision process.

Returning now to steps 554 and 556, those skilled in the art will appreciate that there are many ways to perform illumination processing, an example of which will now be provided with respect to Figure 5(b). The computation of the illuminated area using target horizons according to these embodiments can be performed based on the so-called "Green's functions" of the subsurface that correspond to travel times and amplitudes grids. As will be appreciated by those skilled in the art, the term "horizons" refers to a layer or surface associated with a seismic event or reflection. It should be noted that although travel time is the parameter focused on in the embodiment described below with respect to Figure 5(b), that the amplitudes are implicitly included by applying weights, i.e., geometrical spreading, during the illumination computation. It should further be noted in the exemplary embodiment that travel times can be calculated in different manners, depending on the complexity of the model (velocity and geometry) and affordable time cost.

Figure 5(b) thus depicts a method for illumination processing according to an embodiment. Therein, at step 500, an outer loop is processed on the shot points of the survey. It should be noted in the exemplary embodiment that source-side travel times toward the scatter point can be pre-computed. Next in the exemplary embodiment workflow, a first nested loop is processed on the target horizon associated with the survey as indicated by step 502. As stated earlier, the target horizon in this context can be a single horizon, a set of horizons or a chunk of time-depth slice.

Next in the exemplary embodiment workflow, a second nested loop beginning at step 504 is processed on image dips associated with the survey. This loop is optional, but can provide for multi-dip illumination at one shot point if desired. Next in the exemplary embodiment, a third nested loop is processed over the receivers of the streamer spread, i.e., for each trace among a shot point, at step 506. It should be noted in the exemplary embodiment that for each trace the source position is known and the receiver position is known.

Next in the exemplary embodiment of Figure 5(b), a fourth nested loop is processed on a scattering node, i.e., a reflector, on the current target horizon as indicated by step 508. It should be noted in the exemplary embodiment that for one scattering node in the sub-surface imaging area, i.e., each position of the scatter point, the exemplary embodiment:

1) computes the double travel time; 2) finds the position of the common depth point (CDP) for the trace; and 3) computes the contribution of the local point to the illumination, as shown in processing block 510. The loop 508-512 repeats until all of the scattering nodes have been processed for this particular receiver.

When all of the scattering nodes for a particular receiver have been processed in this way, then a contribution area (i.e., a Fresnel zone) to the illumination map has been determined and the illumination area for one trace has been computed. This trace illumination map can then be added to the existing illumination map, i.e., the illumination map which has been determined as a result of previous iterations, at step 514, and the flow can loop back to process the other receivers at step 516. When all of the receivers have been processed at step 516, then the illumination map at this time includes the illumination of the current shot point for one dip and one target.

The resulting shot point illumination map is aggregated with the existing (preceding) illumination map at step 518, and the process repeats if more image dips are present (if this optional feature is employed) at step 520. Similarly, the entire process is repeated for other target horizon(s) at step 522, after which the composite illumination map will then include illumination maps for each layer. A summation of all of the shot point illumination maps can then be performed at step 524 to generate a composite illumination map for each horizon (and optionally each image dip). When all of the shot points have been evaluated through the outer loop (step 526) the process can terminate generating the complete and finished illumination map.

As mentioned above, these illumination maps (i.e., one for the baseline survey or preplot navigation data, and one for the monitor survey) can then be input to quality assessment component 606 to, e.g., determine differences in fold between the two data sets and output a representative QC indicator associated with the determined difference.

As an example of the different manners in which travel time calculations can be performed, for structurally simple media (including complex in-depth horizon), analytical derivation from velocity laws is the fastest calculation. The exemplary simplified modeling of the true kinematics is generally assumed in the time processing and pre-stack time imaging and is the classical assumption applied for processing onboard a seismic vessel. As another example for more complex media, Eikonal approximation solvers or ray tracing algorithms can be used, i.e., travel time maps can be calculated on-the-fly or pre-computed and stored on board. It should be noted in the example that first-order and second-order travel time derivatives can be derived either analytically or numerically.

Thus it will be appreciated that these embodiments provide for the differences of fold between base and monitor surveys to be mapped and measured on target horizons. It should be noted that implementing these embodiments as new functionality modules (examples of which are described below) allows for the inclusion of these embodiments in existing binning software. In another aspect of the exemplary embodiment, pre-requisite inputs include source-receiver pair positions, e.g., navigation data which can be provided as a P1/90 file (a common format of ASCII file used for storing seismic navigation data), knowledge of the velocity model as defined by the velocity law or $c(x, y, z)$ grid and selected subsurface sets of horizons as defined by the $h(x, y, z(x, y))$ grid in time or depth. The source-receiver pair positions can be retrieved from the files generated by the ship(s)' navigation system during the acquisition. Alternatively, or additionally, such navigation data can be obtained by reading the header trace of each seismic trace after the headers have been generated by the onboard processing since the header information includes information associated with the XY coordinates for the shot source and the receiver corresponding to a given seismic trace.

As mentioned above, when used to perform 4D seismic surveying, monitor acquisitions are conducted on the basis of pre-plot maps designed from baseline acquisitions. Given the potential for new acquisition features in the later performed survey (e.g., possibly differing number of streamer cables between acquisition systems) and current sea conditions, best matching of sources and receivers positions is sought between base and monitor surveys. Quality control of acquisition relies conventionally on maximal admissible mis-positioning. Misfits on source and receiver positions between surveys must not exceed a contractual though arbitrary value. Thus the foregoing embodiments provides for an improved technique to perform quality control of such 4D surveys (although the embodiments are not limited thereto and can also be used in a 3D context.).

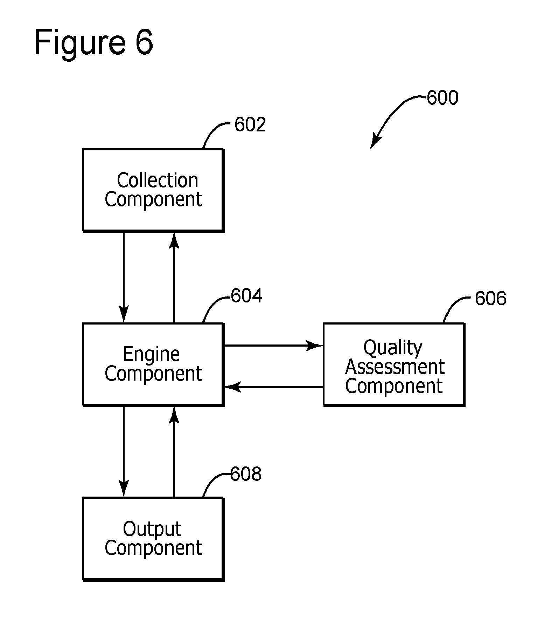

As will be appreciated from the foregoing discussion, methods for performing the quality control of illumination maps according to these embodiments may, at least in part, be implemented in software operating on a suitably programmed computing device. An exemplary implementation, with suitable software modules or components, will now be described with respect to Figures 6-11. Looking now to Figure 6, an exemplary embodiment Smart Quality Control (QC) node 600 comprises a collection component 602, an engine component 604, a quality assessment component 606, and an output component 608. The collection component 602 provides the capability to acquire the navigation data, i.e., source/receiver positions, the knowledge of the velocity model and the selected sub-surface set of horizons. It should be noted in the exemplary embodiment that the collected data can be from either offline or online sources.

Continuing with the exemplary embodiment, the engine component 604 provides the capability to process the collected data based on the previously described workflow. Next in the exemplary embodiment, the quality assessment component 606 provides the capability to generate near real-time quality control information onboard a seismic vessel for making infill reshoot decisions. It should be noted in the exemplary embodiment that the quality assessment component can perform these same calculations on offline data at remote locations. Next in the exemplary embodiment, the output component 608 provides the capability to deliver seismic illumination coverage maps or quality control assessments. It should be noted in the exemplary embodiment that the seismic illumination coverage maps and/or the quality control assessments can be delivered locally, i.e., onboard the seismic vessel or to a remote location, i.e., land based, for analysis and decision making.

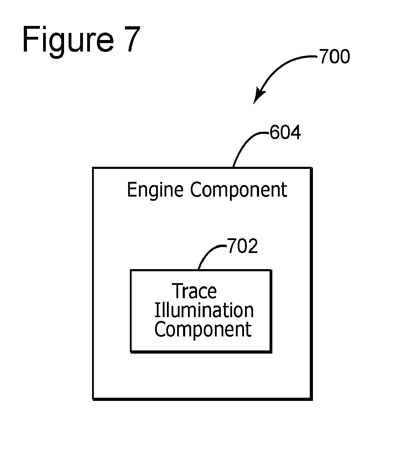

Looking now to Figure 7, an exemplary embodiment 700 comprises the engine component 604 of Figure 6 and a trace illumination component 702. The trace illumination component 702 of the exemplary embodiment provides the capability to generate the trace illuminations for one trace. It should be noted in the exemplary embodiment that the trace illumination is computed based on the previously described exemplary embodiment workflow.

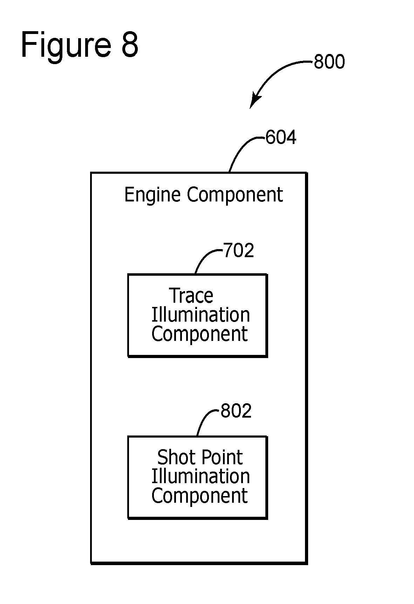

Looking now to Figure 8, an exemplary embodiment 800 comprises an engine component 604 of Figure 6, a trace illumination component 702 of Figure 7, and a shot point illumination component 802. The shot point illumination component 802 provides the capability to generate a shot point illumination for the current shot point based on one dip and one target. It should be noted in the exemplary embodiment that the source position and the receiver position are known.

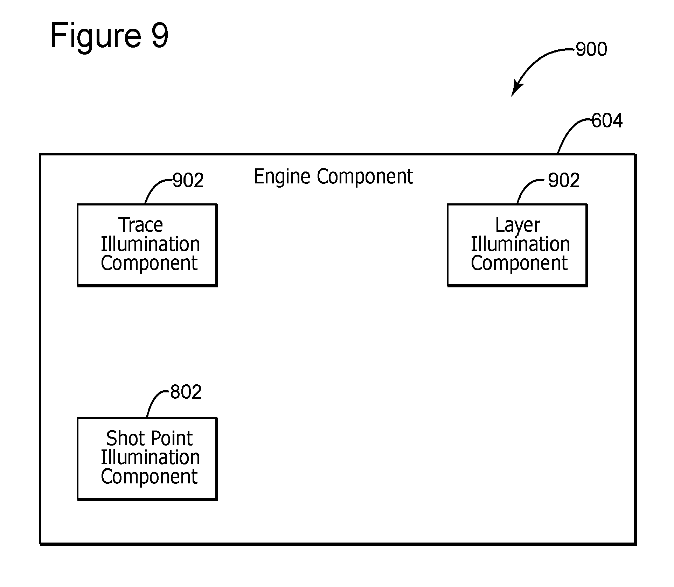

Looking now to Figure 9, an exemplary embodiment 900 comprises the engine component 604 of Figure 6, the trace illumination component 702 of Figure 7, the shot point illumination component 802 of Figure 8 and a layer illumination component 902. The exemplary embodiment layer illumination component 902 provides the capability to generate illumination maps for each layer of the target horizon. It should be noted in the exemplary embodiment that, as mentioned above, the target horizon can be one horizon, a set of horizons or a chunk of time depth slice.

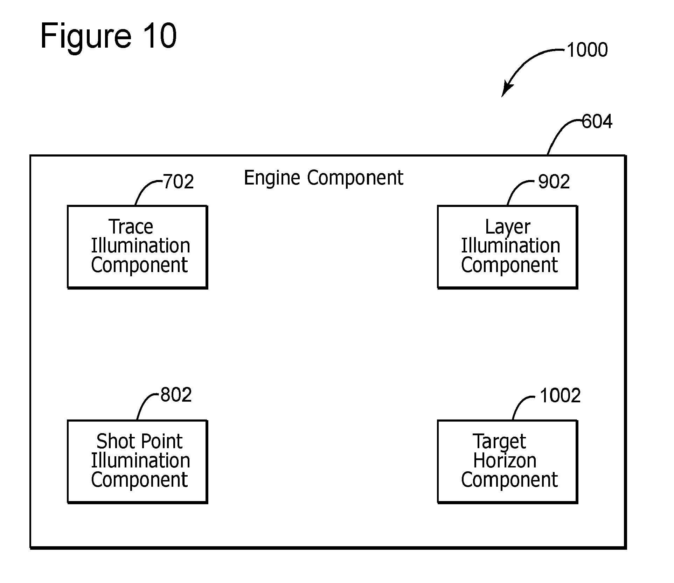

Looking now to Figure 10, an exemplary embodiment 1000 comprises the engine component 604 of Figure 6, the trace illumination component 702 of Figure 7, the shot point illumination component 802 of Figure 8, the layer illumination component 902 of Figure 9 and a target horizon component 1002. The target horizon component 1002 provides the capability to integrate the illumination maps for each layer associated with the target horizons.

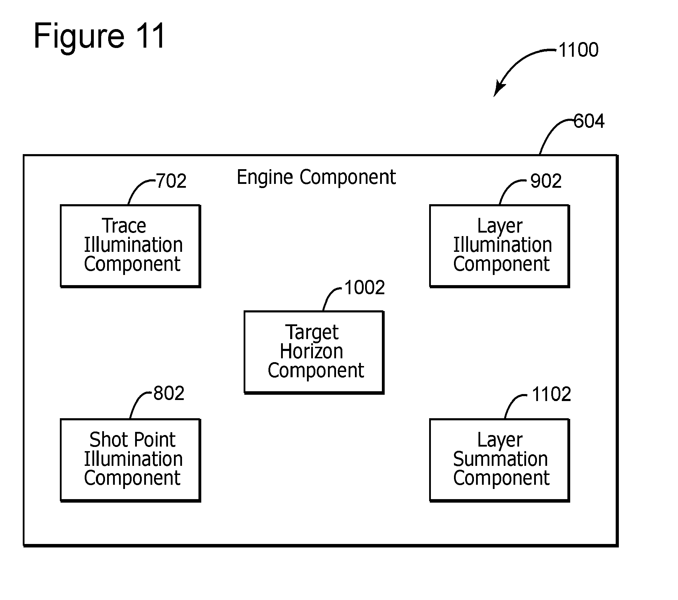

Looking now to Figure 11, an exemplary embodiment 1100 comprises the engine component 604 of Figure 6, the trace illumination component 702 of Figure 7, the shot point illumination component 802 of Figure 8, the layer illumination component 902 of Figure 9, the target horizon component 1002 of Figure 10 and a layer summation component 1102. The layer summation component 1102 provides the capability to combine the illumination maps for each layer associated with the target horizons to generate the final, composite illumination map (e.g., once the processing loops described above with respect to Figure 5(b) are completed).

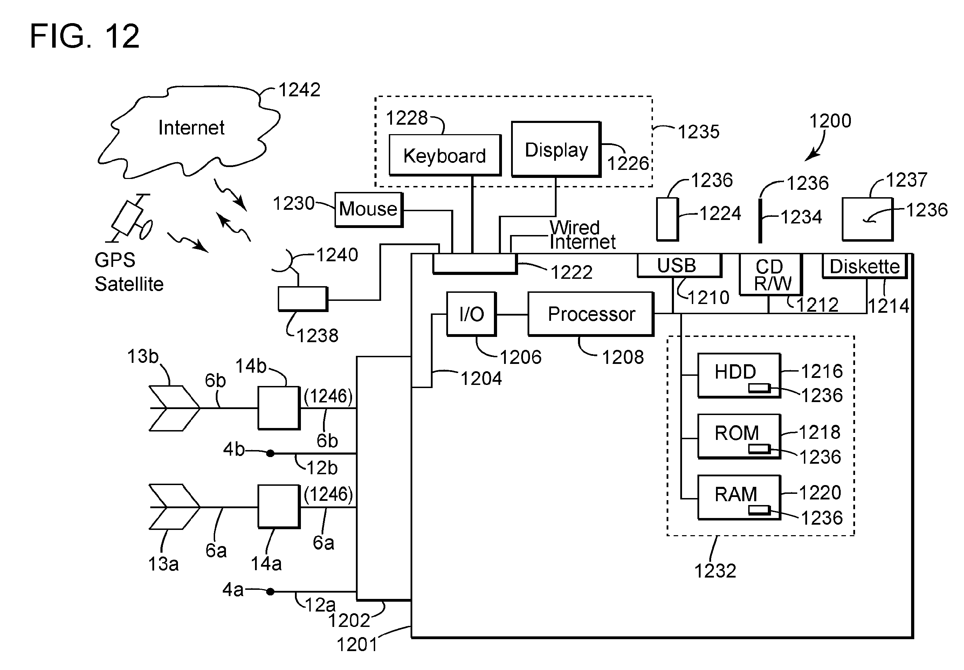

The computing device(s) or other network nodes involved in the seismic illumination map generation as set forth in the above described embodiments may be any type of computing device capable of processing and communicating seismic data associated with a seismic survey. An example of a representative computing system capable of carrying out operations in accordance with these embodiments is illustrated in Figure 12. System 1200 includes, among other items, server 1201, source/receiver interface 1202, internal data/communications bus (bus) 1204, processor(s) 1208 (those of ordinary skill in the art can appreciate that in modern server systems, parallel processing is becoming increasingly prevalent, and whereas a single processor would have been used in the past to implement many or at least several functions, it is more common currently to have a single dedicated processor for certain functions (e.g., digital signal processors) and therefore could be several processors, acting in serial and/or parallel, as required by the specific application), universal serial bus (USB) port 1210, compact disk (CD)/digital video disk (DVD) read/write (R/W) drive 1212, floppy diskette drive 1214 (though less used currently, many servers still include this device), and data storage unit 1232.

Data storage unit 1232 itself can comprise hard disk drive (HDD) 1216 (these can include conventional magnetic storage media, but, as is becoming increasingly more prevalent, can include flash drive-type mass storage devices 1224, among other types), ROM device(s) 1218 (these can include electrically erasable (EE) programmable ROM (EEPROM) devices, ultra-violet erasable PROM devices (UVPROMs), among other types), and random access memory (RAM) devices 1220. Usable with USB port 1210 is flash drive device 1224, and usable with CD/DVD R/W device 1212 are CD/DVD disks 1234 (which can be both read and write-able). Usable with diskette drive device 1214 are floppy diskettes 1237. Each of the memory storage devices, or the memory storage media (1216, 1218, 1220, 1224, 1234, and 1237, among other types), can contain parts or components, or in its entirety, executable software programming code (software) 1236 that can implement part or all of the portions of the method described herein. Further, processor 1208 itself can contain one or different types of memory storage devices (most probably, but not in a limiting manner, RAM memory storage media 1220) that can store all or some of the components of software 1236.

In addition to the above described components, system 1200 also comprises user console 1234, which can include keyboard 1228, display 1226, and mouse 1230. All of these components are known to those of ordinary skill in the art, and this description includes all known and future variants of these types of devices. Display 1226 can be any type of known display or presentation screen, such as liquid crystal displays (LCDs), light emitting diode displays (LEDs), plasma displays, cathode ray tubes (CRTs), among others. User console 1235 can include one or more user interface mechanisms such as a mouse, keyboard, microphone, touch pad, touch screen, voice-recognition system, among other inter-active inter-communicative devices.

User console 1234, and its components if separately provided, interface with server 1201 via server input/output (I/O) interface 1222, which can be an RS232, Ethernet, USB or other type of communications port, or can include all or some of these, and further includes any other type of communications means, presently known or further developed. System 1200 can further include communications satellite/global positioning system (GPS) transceiver device 1238, to which is electrically connected at least one antenna 1240 (according to an exemplary embodiment, there would be at least one GPS receive-only antenna, and at least one separate satellite bi-directional communications antenna). System 1200 can access internet 1242, either through a hard wired connection, via I/O interface 1222 directly, or wirelessly via antenna 1240, and transceiver 1238.

Server 1201 can be coupled to other computing devices, such as those that operate or control the equipment of ship 2, via one or more networks. Server 1201 may be part of a larger network configuration as in a global area network (GAN) (e.g., internet 1242), which ultimately allows connection to various landlines.

According to a further exemplary embodiment, system 1200, being designed for use in seismic exploration, will interface with one or more sources 4a,b and one or more receivers 14. These, as previously described, are attached to streamers 6a,b, to which are also attached birds 13a,b that are useful to maintain positioning. As further previously discussed, sources 4 and receivers 14 can communicate with server 1201 either through an electrical cable that is part of streamer 6, or via a wireless system that can communicate via antenna 1240 and transceiver 1238 (collectively described as communications conduit 1246).

According to further exemplary embodiments, user console 1235 provides a means for personnel to enter commands and configuration into system 1200 (e.g., via a keyboard, buttons, switches, touch screen and/or joy stick). Display device 1226 can be used to show: streamer 6 position; visual representations of acquired data; source 4 and receiver 14 status information; survey information; and other information important to the seismic data acquisition process. Source and receiver interface unit 1202 can receive the hydrophone seismic data from receiver 14 though streamer communication conduit 1248 (discussed above) that can be part of streamer 6, as well as streamer 6 position information from birds 13; the link is bi-directional so that commands can also be sent to birds 13 to maintain proper streamer positioning. Source and receiver interface unit 1202 can also communicate bi-directionally with sources 4 through the streamer communication conduit 1248 that can be part of streamer 6. Excitation signals, control signals, output signals and status information related to source 4 can be exchanged by streamer communication conduit 1248 between system 1200 and source 4.

Bus 1204 allows a data pathway for items such as: the transfer and storage of data that originate from either the source sensors or streamer receivers; for processor 1208 to access stored data contained in data storage unit memory 1232; for processor 1208 to send information for visual display to display 1226; or for the user to send commands to system operating programs/software 1236 that might reside in either the processor 1208 or the source and receiver interface unit 1202.

System 1200 can be used to implement the methods described above associated with illumination map generation according to an exemplary embodiment. Hardware, firmware, software or a combination thereof may be used to perform the various steps and operations described herein. According to an exemplary embodiment, software 1236 for carrying out the above discussed steps can be stored and distributed on multi-media storage devices such as devices 1216, 1218, 1220, 1224, 1234, and/or 1237 (described above) or other form of media capable of portably storing information (e.g., universal serial bus (USB) flash drive 1224). These storage media may be inserted into, and read by, devices such as the CD-ROM drive 1214, the disk drive 1212, among other types of software storage devices.

It should be noted in the embodiments described herein that these techniques can be applied in either an "offline", e.g., at a land-based data processing center or an "online" manner, i.e., in near real time while onboard the seismic vessel. For example, an assessment of the seismic illumination quality of a given target can be performed at the end of each acquired line during a 4D survey.

The disclosed exemplary embodiments provide a system, and a method for quality control indicator calculation associated with seismic data. It should be understood that this description is not intended to limit the invention. On the contrary, the exemplary embodiments are intended to cover alternatives, modifications and equivalents, which are included in the spirit and scope of the invention. Further, in the detailed description of the exemplary embodiments, numerous specific details are set forth in order to provide a comprehensive understanding of the invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein. The methods or flow charts provided in the present application may be implemented in a computer program, software, or firmware tangibly embodied in a computer-readable storage medium for execution by a general purpose computer or a processor.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

**Claims**

1. A method for performing quality control of a seismic survey comprising:

   acquiring (552) navigation data associated with positions of sources and receivers used to perform the seismic survey;
   determining (556) an illumination associated with one or more horizons of a subsurface using the navigation data;
   comparing the determined illumination with an illumination from a baseline survey or preplot navigation data (554); and
   outputting (558) at least one quality control indicator based on the comparing step.

2. The method of claim 1, further comprising:

   determining whether to re-shoot an acquisition line of the seismic survey based on the quality control indicator.

3. The method of claim 1, wherein the step of determining an illumination further comprises:

   generating a plurality of trace illuminations for a plurality of traces wherein said plurality of trace illuminations are associated, respectively, with a plurality of scatter points and each scatter point is based on one of a plurality of known source positions and known receiver positions associated with a shot point;
   generating a plurality of shot point illuminations based on a portion of said plurality of trace illuminations associated with a target horizon;
   summing said plurality of shot point illuminations to generate a plurality of layer illuminations associated with said target horizon; and
   summing said plurality of layer illuminations to generate said map of seismic illumination.

4. The method of claim 3, wherein said generating a plurality of trace illuminations further comprises:

   computing the double travel time associated with each of said plurality of traces;
   determining a position of a reflection point associated with each of said plurality of traces; and
   computing a contribution of each of said plurality of scatter points to their trace illuminations.

5. The method of claim 3, wherein said target horizon is referenced in vertical depth.

6. The method of claim 3, wherein said target horizon is referenced in vertical migrated time.

7. The method of claim 3, wherein said map of seismic illumination is generated based on a high-frequency approximation.

8. The method of claim 1, wherein the steps of comparing and outputting further comprise at least one of:

   -- computing difference maps of fold of illumination either at midpoint bin coordinates or in reflection point bin coordinates; and/or
   -- computing maps of misfits between source position + and receiver position, either at midpoint bin coordinates or at reflection point bin coordinates; and/or
   -- computing maps of misfits between reflection point positions between monitor survey traces versus and baseline survey traces, or between true acquisition traces versus preplot traces, either at midpoint bin coordinates or at reflection point bin coordinates.

9. The method of claim 1, wherein the step of comparing the determined illumination with the illumination from a baseline survey or preplot navigation data further comprises:

   determining a difference in fold between the determined illumination associated with the seismic survey and the illumination from the baseline survey or preplot navigation data.

**10.** A quality control system for marine seismic data acquisition, said system comprising:

one or more processors (1208) configured to execute computer instructions and a memory configured to store said computer instructions wherein said computer instructions further comprise:

a collection component (602) for collecting navigation data associated with a seismic survey;
an engine component (604) for processing said navigation data based on a target horizon to determine an illumination associated with the seismic survey ;
a quality assessment component (606) for calculating a quality factor associated with the illumination based on an output from the engine component and based on another illumination associated with either a baseline seismic survey or preplot navigation data; and
an output component (608) for outputting said quality factor.

**11.** The system of claim 10, wherein said engine component further comprises a trace illumination component for generating a plurality of trace illuminations.

**12.** The system of claim 10, wherein said engine component further comprises a shot point illumination component for generating said plurality of shot point illuminations.

**13.** The system of claim 10, wherein said engine component further comprises a layer illumination component for generating said plurality of layer illuminations.

**14.** The system of claim 10, wherein said quality assessment component provides incremental output, associated with the completion of each acquired line, to said output component for consideration in an in-fill decision process.

**15.** The system of claim 10, wherein the engine component operates to determine the illumination by: generating a plurality of trace illuminations for a plurality of traces wherein said plurality of trace illuminations are associated, respectively, with a plurality of scatter points and each scatter point is based on one of a plurality of known source positions and known receiver positions associated with a shot point;
generating a plurality of shot point illuminations based on a portion of said plurality of trace illuminations associated with a target horizon;
summing said plurality of shot point illuminations to generate a plurality of layer illuminations associated with said target horizon; and
summing said plurality of layer illuminations to generate a map of seismic illumination.

# Figure 1
# (Prior Art)

Conventional fold map: Illumination at the surface I $_{ref}$ $(X_S, X_R)$

Illumination at the target surface $I_{ref}[X_S, X_R, V(X_T), P(X_T)]$
T: target, X :(x,y,z or time)
$V(X_T)$: velocity model. $P(X_T)$: target geometry

Figure 2

# Figure 3

Acquisition Direction

EP 2 743 737 A2

Figure 4

# Figure 5(a)

```
        ┌──────────────────────┐                    ┌──────────────────────┐
        │  Baseline Survey Data│ ⌐550              │                      │ ⌐552
        │          or          │                    │  Monitor Survey Data │
        │ Preplot Navigation data│                  │                      │
        └──────────┬───────────┘                    └──────────┬───────────┘
                   │                                           │
                   ▼                                           ▼
        ┌──────────────────────┐ ⌐554              ┌──────────────────────┐ ⌐556
        │                      │                    │                      │
        │ Illumination Processing│                  │ Illumination Processing│
        │                      │                    │                      │
        └──────────┬───────────┘                    └──────────┬───────────┘
                    ╲                                          ╱
                     ╲                                        ╱
                      ▼                                      ▼
                   ┌──────────────────────────────┐
                   │ Quality Control Analysis │──558
                   │         and Output           │
                   └──────────────────────────────┘
```

## Figure 5(b)

Select Next Shot Point — 500

↓ 502

Select Next Target Horizon

↓ 504

Select Next Image Dip

↓ 506

Select Next Receiver

↓ 508

Select Next Scattering Node

↓ 510

- Compute the Double Traveling Time
- Find the Position of the Reflection Point for a Trace
- Compute the Contribution of the Local Scatter Point to the Illumination

↓ 512

More Scattering Nodes ? — Yes → (loop)

↓ No — 514

Add Trace Illumination Map to Preceding Illumination Map

↓ 516

More Receivers? — Yes → (loop)

↓ No — 518

Add Shot Point Illumination Map to Preceding Illumination Map

↓ 520

More Dips ? — Yes → (loop)

↓ No

More Horizons ? — Yes → (loop) — 522

↓ No — 524

Add all Shot Point Illumination Maps to Composite Map

↓ 526

More Shot Points ? — Yes → (loop)

↓ No

End

# Figure 6

# Figure 7

700

604

Engine Component

702

Trace
Illumination
Component

# Figure 8

800

604

Engine Component

702

Trace
Illumination
Component

802

Shot Point
Illumination
Component

# Figure 9

900

604

Engine Component

902

Trace
Illumination
Component

902

Layer
Illumination
Component

802

Shot Point
Illumination
Component

# Figure 10

1000

604

Engine Component

702

Trace
Illumination
Component

902

Layer
Illumination
Component

802

Shot Point
Illumination
Component

1002

Target
Horizon
Component

# Figure 11

1100

604

**Engine Component**

702

Trace
Illumination
Component

902

Layer
Illumination
Component

1002

Target
Horizon
Component

802

Shot Point
Illumination
Component

1102

Layer
Summation
Component

# FIG. 12

EP 2 743 737 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61738070 A
- US 7406383 B
- US 6691075 B
- US 20090279386 A1

**Non-patent literature cited in the description**

- Infill Decisions Using Simulated Migration Amplitudes. **M. BRINK ; N. JONES ; J. DOHERTY ; V. VINJE ; R. LAURAIN.** 74th meeting. Society of Exploration Geophysicists, 2004, 57-60